# EUROPEAN PATENT APPLICATION

(11) **EP 4 636 881 A1**
(43) Date of publication of application: **22.10.2025**
(21) Application number: 25169762.9
(22) Date of filing: 10.04.2025
(51) Int. Cl.: H01M 10/04, H01M 10/052, H01M 10/0587, H01M 50/107, H01M 50/179, H01M 50/533, H01M 50/538, H01M 50/545, H01M 50/55, H01M 50/559, H01M 50/586, H01M 50/593

(54) **SECONDARY BATTERY**

(30) Priority: 15.04.2024 KR 20240049781
(71) Applicant: SAMSUNG SDI CO., LTD., Yongin-si, Gyeonggi-do 17084 (KR)
(72) Inventor: YU, GWAN HYEON, 17084 Yongin-si, Gyeonggi-do (KR); JUNG, HYUN KI, 17084 Yongin-si, Gyeonggi-do (KR); KIM, MYUNG SEOB, 17084 Yongin-si, Gyeonggi-do (KR); YOO, YOON SUN, 17084 Yongin-si, Gyeonggi-do (KR); JUN, WOO TAE, 17084 Yongin-si, Gyeonggi-do (KR); LEE, DONG SUB, 17084 Yongin-si, Gyeonggi-do (KR); KIM, MUN SUNG, 17084 Yongin-si, Gyeonggi-do (KR); PARK, GUN GUE, 17084 Yongin-si, Gyeonggi-do (KR); KO, SUNG GWI, 17084 Yongin-si, Gyeonggi-do (KR)
(74) Representative: Gulde & Partner

(57) **Abstract**

A secondary battery includes: an electrode assembly having a first electrode plate having a first electrode substrate tab arranged in one direction, a second electrode plate having a second electrode substrate tab arranged in an opposite direction to the first electrode substrate tab, and a separator interposed between the first electrode plate and the second electrode plate, and wound into a cylindrical shape; a cylindrical can configured accommodating the electrode assembly; a first electrode current collector plate electrically connected to the first electrode substrate tab; and a second electrode current collector plate electrically connected to the second electrode substrate tab, wherein the first electrode substrate tab contacts the first electrode current collector plate, and the separator extends and contacts the first electrode current collector plate with the first electrode substrate tab interposed therebetween.

## Description

### BACKGROUND

### 1. Field

Aspects of some embodiments of the present disclosure relate to a secondary battery with relatively improved safety.

### 2. Description of the Related Art

Recently, consumer demand for a secondary battery in which both positive and negative electrode terminals are located on one side of the secondary battery has been increasing. This type of secondary battery may have an advantage of providing a relatively simple electrical connection structure with the outside.

In the cylindrical secondary battery of the above-mentioned type, an electrode assembly is accommodated inside a cylindrical can. The can may be electrically connected to a negative electrode of the electrode assembly through a negative electrode current collector plate. A positive terminal is provided at the top of the can. The positive terminal is electrically connected to a positive electrode of the electrode assembly through a positive electrode current collector plate. In this case, the positive electrode current collector plate is welded to a positive electrode uncoated portion of the electrode assembly. The positive electrode current collector plate and a negative electrode mixture part (negative electrode active material coating part) are spaced a certain distance apart.

However, as the cylindrical secondary battery is used, because the electrode plate expands little by little, a short may occur when the negative electrode mixture part and the positive electrode current collector plate come into contact. Therefore, a method capable of preventing or reducing this problem may be desirable.

The above information disclosed in this Background section is only for enhancement of understanding of the background and therefore the information discussed in this Background section does not necessarily constitute prior art.

### SUMMARY

Aspects of some embodiments of the present disclosure include a secondary battery with relatively improved safety.

A secondary battery according to some embodiments of the present disclosure may include an electrode assembly provided with a first electrode plate having a first electrode substrate tab arranged in one direction, a second electrode plate having a second electrode substrate tab arranged in an opposite direction to the first electrode substrate tab, and a separator interposed between the first electrode plate and the second electrode plate, and wound into a cylindrical shape, a cylindrical can configured to accommodate the electrode assembly, a first electrode current collector plate electrically connected to the first electrode substrate tab, and a second electrode current collector plate electrically connected to the second electrode substrate tab, wherein the first electrode substrate tab may come into contact with the first electrode current collector plate, and the separator may extend and come into contact with the first electrode current collector plate with the first electrode substrate tab interposed therebetween.

According to some embodiments, the first electrode substrate tab may be bent and may come into contact with one surface of the first electrode current collector plate, and then an end portion of the separator may come into contact with the first electrode substrate tab.

According to some embodiments, the separator may include a first separator on one side of the first electrode substrate tab and a second separator on the other side of the first electrode substrate tab.

According to some embodiments, the first separator and the second separator may have different lengths along a longitudinal direction of the electrode assembly.

According to some embodiments, the first separator may be longer than the second separator, and the first separator may come into contact with the first electrode current collector plate with the first electrode substrate tab interposed therebetween.

According to some embodiments, the first electrode substrate tab may be bent and may come into contact with one surface of the first electrode current collector plate, and then an end portion of the separator may come into contact with the first electrode substrate tab.

According to some embodiments, the second separator may be spaced apart from the first electrode current collector plate.

According to some embodiments, the can may include a circular upper surface portion in which a terminal hole is formed through a center, and a cylindrical side portion extending downward from the upper surface portion and electrically connected to the second electrode current collector plate.

According to some embodiments, the secondary battery may further include a terminal portion including a rivet terminal coupled to the terminal hole and having one end exposed to the outside of the upper surface portion and the other end in contact with the other surface of the first electrode current collector plate to electrically connect to the first electrode current collector plate, and at least one gasket insulating between the rivet terminal and the upper surface portion, and a cap assembly including a cap plate coupled to the side portion to seal the can and a gasket formed of an insulating material and inserted between the side portion and the cap plate.

In addition, a cylindrical secondary battery according to some embodiments of the present disclosure may include a can having a circular upper surface portion and a cylindrical side portion extending downward from the upper surface, an electrode assembly provided with a first electrode plate having a first electrode substrate tab arranged toward the upper surface portion, a second electrode plate having a second electrode substrate tab arranged in an opposite direction to the first electrode substrate tab, and a first separator interposed between the first electrode plate and the second electrode plate, and wound in a cylindrical shape, a first electrode current collector plate electrically connected to the first electrode substrate tab, and a second electrode current collector plate electrically connected to the second electrode substrate tab, wherein the first electrode substrate tab may come into contact with the first electrode current collector plate, and the first separator may come into contact with the first electrode current collector plate with the first electrode substrate tab and an end portion of the second electrode plate interposed therebetween.

According to some embodiments, a protruding length by which the first separator protrudes upward from an upper end of the second electrode plate may be shorter than a protruding length by which the first electrode substrate tab protrudes upward from the upper end of the second electrode plate.

According to some embodiments, the first electrode substrate tab may be bent by a folding length before being welded to the first electrode current collector plate.

According to some embodiments, the protruding length of the first separator may be a length obtained by subtracting the folding length from the protruding length of the first electrode substrate tab.

According to some embodiments, the electrode assembly may further include a second separator.

According to some embodiments, a protruding length by which the second separator protrudes upward from the upper end of the second electrode plate may be shorter than the protruding length of the fist separator.

According to some embodiments, the first electrode substrate tab may face a winding center of the electrode assembly, and the first separator may be arranged in a direction in which the first electrode substrate tab is bent.

According to some embodiments, the second separator may be spaced apart from the first electrode current collector plate.

According to some embodiments, the cylindrical secondary battery may further include a terminal portion coupled to the upper surface portion and electrically connected to the first electrode current collector plate, and a cap assembly including a cap plate coupled to the side portion to seal the can and a gasket formed of an insulating material and inserted between the side portion and the cap plate.

According to some embodiments, the terminal portion may include a rivet terminal having one end exposed to the outside of the upper surface portion and the other end in contact with the other surface of the first electrode current collector plate, and at least one gasket insulating between the rivet terminal and the upper surface portion.

According to some embodiments, the second electrode plate may be electrically connected to the side portion.

### BRIEF DESCRIPTION OF DRAWINGS

FIG. 1 is a perspective view of a cylindrical secondary battery according to some embodiments of the present disclosure.
FIG. 2A is a cross-sectional view of the cylindrical secondary battery according to FIG. 1.
FIG. 2B is a cross-sectional view of a cylindrical secondary battery according to some embodiments of the present disclosure.
FIG. 3 is a partial cross-sectional view showing some manufacturing operations of an electrode assembly according to FIGS. 2A and 2B.
FIG. 4 is a partial cross-sectional view showing an operation after the manufacturing operation according to FIG. 3.
FIG. 5 is a partial cross-sectional view showing some manufacturing operations of an electrode assembly according to some embodiments of the present disclosure.
FIG. 6 is a partial cross-sectional view showing an operation after the manufacturing operation according to FIG. 5.
FIG. 7 is a partial cross-sectional view showing the cylindrical secondary battery according to some embodiments of the present disclosure.

### DETAILED DESCRIPTION

Embodiments of the present disclosure are provided to more completely explain the present disclosure to those skilled in the art, the following embodiments may be modified into various other forms, and the scope of the present disclosure is not limited to the following embodiments. Rather, these embodiments are provided to make the present disclosure more faithful and complete, and to fully convey the spirit of the present disclosure to those skilled in the art.

In addition, in the drawings below, the thickness and size of each layer are exaggerated for convenience and clarity of explanation, and the same reference numerals indicate the same components in the drawings. As used in the present specification, the term "and/or" includes any one and all combinations of one or more of the listed items. In addition, the meaning of "connected" in this specification refers not only to a case where member A and member B are directly connected, but also to a case where member C is interposed between member A and member B to indirectly connect member A and member B.

Terms used in the present specification are intended to describe specific embodiments and are not intended to limit the present disclosure. As used in the present specification, the singular forms include the plural forms unless the context clearly indicates otherwise. In addition, when used in the present specification, "comprise" and "include" and/or "comprising" and "including" specify the presence of stated features, numbers, steps, operations, members, elements, and/or groups thereof and do not preclude the presence or addition of one or more other features, numbers, steps, operations, members, elements, and/or groups.

Although terms such as first, second, and the like are used in the present specification to describe various members, components, regions, layers, and/or portions, it is obvious that such members, components, regions, layers, and/or portions should not be limited by such terms. These terms are used only to distinguish one member, component, region, layer or portion from another member, component, region, layer or portion. Therefore, a first member, component, region, layer or portion described below may refer to a second member, component, region, layer or portion without departing from the teachings of the present disclosure.

Spatially-related terms such as "beneath," "below," "lower," "above," and "upper" may be utilized to facilitate understanding of one element or feature and another element or feature shown in the drawings. These spatially-related terms are intended to facilitate understanding of the present disclosure according to various process states or use states and are not intended to limit the present disclosure. For example, when an element or feature in the drawings is inverted, the element or feature described as "lower" or "below" becomes "upper" or "above". Therefore, "lower" is a concept encompassing "upper" or "lower."

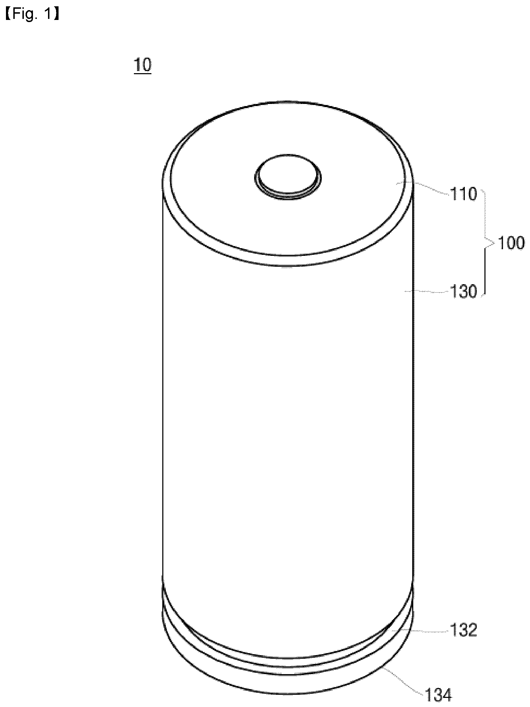

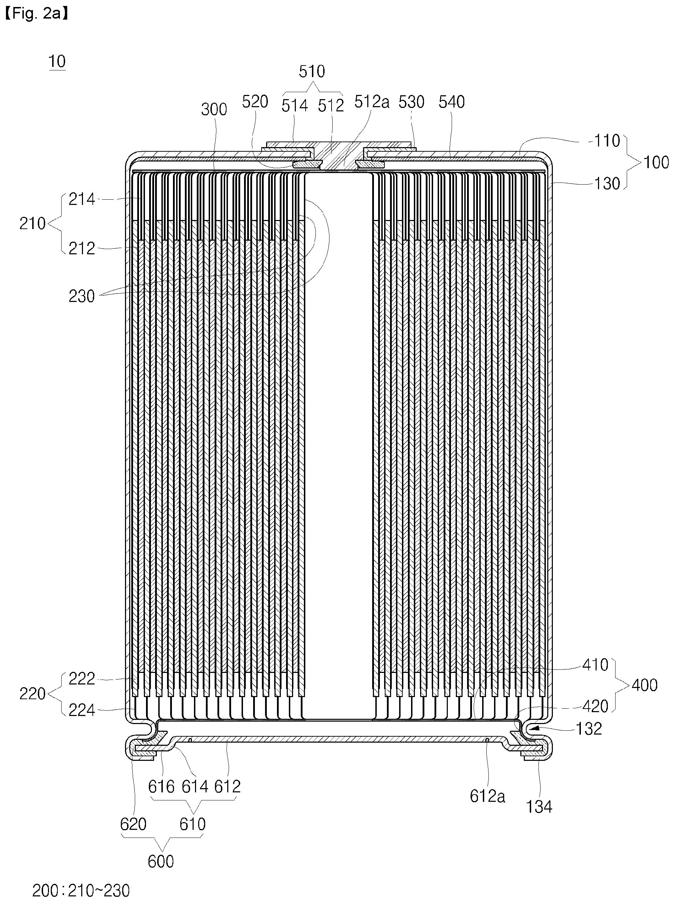

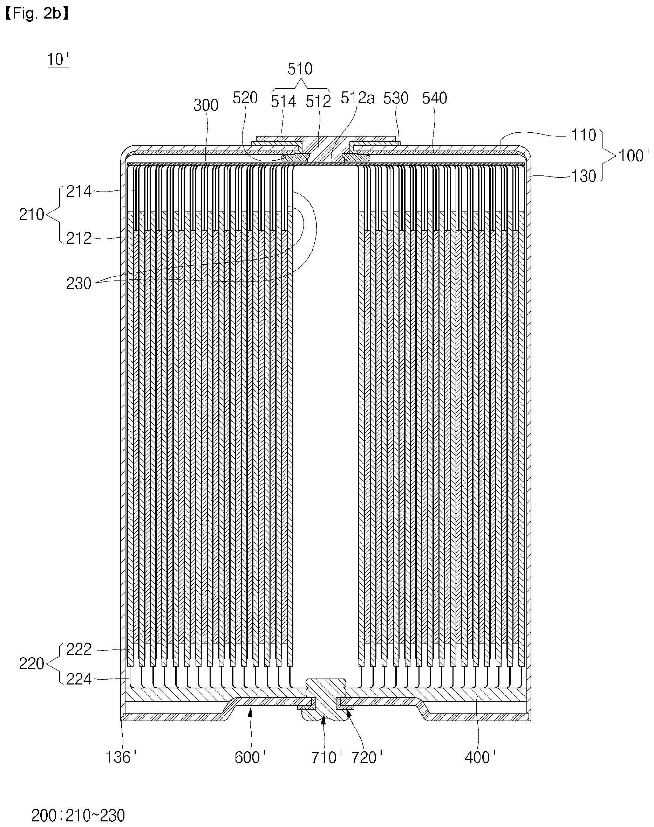

Hereinafter, a cylindrical secondary battery and a manufacturing method thereof according to some embodiments of the present disclosure will be described in more detail with reference to the accompanying drawings (for convenience, upward is defined and described as an upper direction and downward is defined and described as a lower direction based on FIGS. 1 and 2).

FIG. 1 is a perspective view of a cylindrical secondary battery according to some embodiments of the present disclosure. FIG. 2A is a cross-sectional view of the cylindrical secondary battery according to FIG. 1.

Referring to FIGS. 1 and 2A, a cylindrical secondary battery 10 according to some embodiments of the present disclosure may include a cylindrical can 100, an electrode assembly 200 accommodated inside the can 100, a first electrode current collector plate 300, a second electrode current collector plate 400, a terminal portion 500 provided on one side of the can 100, and a cap assembly 600 provided on the other side of the can 100.

Referring to FIGS. 1 and 2A, the can 100 may form the outer shape of the secondary battery 10 and may have a cylindrical shape with one end open. The can 100 may include or be referred to as a case, housing, or exterior material. The can 100 may include a circular upper surface portion 110 and a cylindrical side portion 130 extending downward from the upper surface portion 110. Because a lower part of the side portion 130 is open, the can 100 has a cylindrical shape with a lower end open.

A terminal hole may be formed through the center of the upper surface portion 110. A portion of the terminal portion may be exposed to the outside of the secondary battery 10 through the terminal hole.

The side portion 130 may be integrally formed with an upper end connected to the upper surface portion 110. A lower end of the side portion 130 is open, and the cap assembly 600 is provided at the open end portion. A beading portion 132 may be formed in the side portion 130 adjacent to the lower end. The beading portion 132 may be formed to be concave inward from the side portion 130. The end portion spaced apart from the beading portion 132 may be bent toward the inside of the can 100 to form a crimping portion 134. The beading portion 132 prevents or reduces instances of the electrode assembly 200 being separated. The cap assembly 600 may be located between the beading portion 132 and the crimping portion 134. The crimping portion 134 may fix the cap assembly 600 to seal the can 100.

The can 100 having the above-described structure may be made of a metal such as steel, nickel-plated steel, a steel alloy, aluminum, an aluminum alloy, or cold rolled sheet for deep drawing (SPCE), or a laminated film or plastic material that forms a pouch. Inside the can 100, the electrode assembly 200, the first electrode current collector plate 300, and the second electrode current collector plate 400 may be accommodated together with an electrolyte.

Referring to FIG. 2A, the electrode assembly 200 may include or be referred to as an electrode group, an electrode body, or a jelly roll. The electrode assembly 200 may have a form in which a first electrode plate 210, a second electrode plate 220, and a separator 230 interposed therebetween are wound into a cylindrical shape. A hollow cylindrical core may be provided at the center of the electrode assembly 200. In addition, in some examples, a center pin (optional) may be inserted into the core. According to some embodiments, the first electrode plate 210 may be a positive electrode plate and the second electrode plate 220 may be a negative electrode plate. However, it may also be configured in the opposite way.

The first electrode plate 210 may function as a positive electrode. The first electrode plate 210 may include a first substrate which is a thin metal plate, a first active material layer 212 provided on at least one surface of the first substrate by coating or the like, and a first uncoated portion which is not provided with the first active material layer 212. The first substrate may include an aluminum foil, and the first active material layer may include a transition metal oxide. A plurality of first electrode substrate tabs 214 may be provided by cutting the first uncoated portion into a certain shape by notching or the like. According to some embodiments, the first electrode substrate tab 214 may be arranged toward the upper surface portion 110 of the can 100. In addition, the first electrode substrate tab 214 may be electrically connected to the first electrode current collector plate 300. As an example, the first electrode substrate tab 214 may be bent in one direction and then coupled to the first electrode current collector plate 300 by welding (this will be described in detail below).

In some examples, a compound capable of reversible intercalation and deintercalation of lithium (lithiated intercalation compound) may be used as a positive electrode active material. Specifically, one or more of composite oxides of a metal selected from cobalt, manganese, nickel, and a combination thereof and lithium may be used.

The composite oxide may be a lithium transition metal composite oxide, and specific examples may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following formulas may be used. LiₐA_{1-b}X_{b}O_{2-c}D_{c}(0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα(0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2(0.90≤a≤1.8, 0≤b≤0.9, 0≤c≤0.5, 0≤d≤0.5, 0≤e≤0.1); LiaNiGbO2(0.90≤a≤1.8, 0.001≤b≤0.1); LiaCoGbO2(0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4(0.90≤a≤1.8, 0≤g≤0.5); Li(3-f)Fe2(PO4)3(0≤f≤2); LiaFePO4(0.90≤a≤1.8).

In the above formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; L1 is Mn, Al, or a combination thereof.

A positive electrode for a lithium secondary battery may include a current collector (e.g., a first substrate) and a positive electrode active material layer formed on the current collector. The positive electrode active material layer may include a positive electrode active material and may further include a binder and/or a conductive material.

The content of the positive electrode active material may range from 90 wt% to 99.5 wt% based on 100 wt% of the positive electrode active material layer, and the content of the binder and the conductive material may range from 0.5 wt% to 5 wt% each based on 100 wt% of the positive electrode active material layer.

Aluminum may be used as the current collector, but the present disclosure is not limited thereto.

The second electrode plate 220 may include a second substrate which is a thin metal plate, a second active material layer 222 provided on at least one surface of the second substrate by coating or the like, and a second uncoated portion which is not provided with the second active material layer 222. The second substrate may include a copper or nickel foil, and the second active material layer may include a carbon-based material, Si, Sn, tin oxide, a tin alloy composite, a transition metal oxide, lithium metal nitride or a metal oxide, etc. A plurality of second electrode substrate tabs 224 may be provided by cutting the second uncoated portion into a certain shape by notching or the like. According to some embodiments, the second electrode substrate tab 224 may be arranged toward the bottom of the can 100. In addition, the second electrode substrate tab 224 may protrude downward from the separator 230 and may be electrically connected to the second electrode current collector plate 400. A portion of the second electrode substrate tab 224 may be electrically connected to the beading portion 132 of the can 100. As an example, the second electrode substrate tab 224 may be bent in one direction and then coupled to the second electrode current collector plate 400 by welding.

In some examples, a negative electrode active material may include a material capable of reversible intercalation/deintercalation of lithium ions, lithium metal, an alloy of lithium metal, a material capable of doping and dedoping lithium, or a transition metal oxide.

The material capable of reversible intercalation/deintercalation of lithium ions may be a carbon-based negative electrode active material, and may include, for example, crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, calcined coke, etc.

An Si-based negative electrode active material or an Sn-based negative electrode active material may be used as the material capable of doping and dedoping lithium. The Si-based negative electrode active material may be silicon, a silicon-carbon composite, SiOₓ (0 < x < 2), an Si-based alloy, or a combination thereof.

The silicon-carbon composite may be a composite of silicon and amorphous carbon. According to some embodiments, the silicon-carbon composite may be in the form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer located on the surface of the core.

A negative electrode for a lithium secondary battery may include a current collector (e.g., a second substrate) and a negative electrode active material layer formed on the current collector. The negative electrode active material layer may include a negative electrode active material and may further include a binder and/or a conductive material.

For example, the negative electrode active material layer may include 90 wt% to 99 wt% of the negative electrode active material, 0.5 wt% to 5% of the binder, and 0 wt% to 5% of the conductive material.

The binder may be a non-aqueous binder, an aqueous binder, a dry binder, or a combination thereof. When an aqueous binder is used as the negative electrode binder, the negative electrode binder may further include a cellulose-based compound capable of imparting viscosity.

The current collector may be selected from copper foil, nickel foil, stainless steel foil, titanium foil, nickel foam, copper foam, a polymer substrate coated with a conductive metal, and combinations thereof.

The separator 230 may prevent or reduce instances of an electrical short between the first electrode plate 210 and the second electrode plate 220 and allow only movement of lithium ions. The separator 230 may have a length that allows contact with the first electrode current collector plate 300 based on a longitudinal direction of the electrode assembly 200 (this will be described in detail below). For example, the separator may include a porous substrate and a coating layer containing an organic material, an inorganic material, or a combination thereof located on one or both sides of the porous substrate.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic and inorganic materials may be present in a mixture in a single coating layer or may be present in the form of a coating layer including the organic material and a coating layer including the inorganic material, which are laminated.

An electrolyte for a lithium secondary battery may include a non-aqueous organic solvent and a lithium salt.

The non-aqueous organic solvent serves as a medium through which ions involved in the electrochemical reaction of the battery may move. The non-aqueous organic solvent may be a carbonate-based, ester-based, ether-based, ketone-based, or alcohol-based solvent, an aprotic solvent, or a combination thereof, and may be used alone or in a mixture of two or more types.

In addition, when using a carbonate-based solvent, a mixture of a cyclic carbonate and a chain carbonate may be used.

The electrode assembly 200 having the above-described structure may be electrically connected to the first electrode current collector plate 300 and the second electrode current collector plate 400 and may be electrically connected to the terminal portion 500 and the can 100.

Referring to FIG. 2A, the first electrode current collector plate 300 has a disk shape and may be made of the same material as the first electrode plate 210. As an example, the first electrode current collector plate 300 may be made of aluminum or an aluminum alloy. A diameter of the first electrode current collector plate 300 may be smaller than a diameter of the can 100. This is to prevent or reduce instances of the first electrode current collector plate 300 being electrically connected to the can 100. The bottom surface of the first electrode current collector plate 300 may be welded in a state of being in contact with the first electrode substrate tab 214. Therefore, the first electrode current collector plate 300 and the first electrode plate 210 may be electrically connected. In addition, an upper surface of the first electrode current collector plate 300 may be welded to a rivet terminal 510 of the terminal portion 500 which will be described below. Accordingly, the first electrode current collector plate 300 and the rivet terminal 510 may be electrically connected. Therefore, the first electrode plate 210 and the rivet terminal 510 may be electrically connected to each other by the first electrode current collector plate 300. That is, the first electrode current collector plate 300 may become a path for current flow between the first electrode plate 210 and the rivet terminal 510.

Referring to FIG. 2A, the second electrode current collector plate 400 may include a plate surface portion 410 in a disk shape and a contact portion 420 extending from the plate surface portion 410. An upper surface of the plate surface portion 410 may be welded while in contact with the second electrode substrate tab 224. Accordingly, the second electrode current collector plate 400 and the second electrode plate 220 may be electrically connected. To this end, the second electrode current collector plate 400 may be made of the same material as the second electrode plate 220. As an example, the second electrode current collector plate 400 may be made of copper. According to some embodiments, the contact portion 420 may extend downward from an edge of the plate surface portion 410. The contact portion 420 may be in close contact with an inner surface of the beading portion 132. To this end, the contact portion 420 may have a curve corresponding to the curve of the beading portion 132. As an example, the contact portion 420 may be welded to the beading portion 132 and electrically connected to the beading portion 132. However, the second electrode current collector plate 400 is not electrically connected to the cap assembly 600.

Meanwhile, referring to FIGS. 1 and 2A, the terminal portion 500 may include the rivet terminal 510, a coupling member 520 for fixing the rivet terminal 510, and at least one gasket 530 and/or 540 for insulating the rivet terminal 510.

The rivet terminal 510 may be inserted into the terminal hole formed in the upper surface portion 110 of the can 100. The rivet terminal 510 is electrically connected to the first electrode plate 210 through the first electrode current collector plate 300. The rivet terminal 510 is a terminal coupled by a riveting method. The rivet terminal 510 may be composed of a rivet body 512 and a head 514. The rivet terminal 510 may be inserted into the terminal hole from the outside of the can 100 toward the inside of the can 100. In this case, the head 514 of the rivet terminal 510 is located on the outside of the can 100, and the rivet body 512 is located inside the can 100. When the rivet terminal 510 is coupled, at least one gasket 530 and/or 540 may be inserted between the rivet terminal 510 and the upper surface portion 110 of the can 100 to insulate the can 100 and the rivet terminal 510. In this state, an end portion 512a of the rivet body 512 may be compressed and deformed by a process such as pressing or spinning. Accordingly, the rivet terminal 510 may be in close contact with the upper surface portion 110 of the can 100. In this case, advantageously, a separate coupling member 520 in a ring shape may be used to more firmly fix the rivet terminal 510.

The coupling member 520 may be inserted onto an outer peripheral surface of the rivet body 512. The coupling member 520 may also be deformed when the rivet terminal 510 is compressed and deformed and may be fixed to the upper surface portion 110 along with the rivet terminal 510. The coupling member 520 may be made of an insulating material or a metal material.

According to some embodiments, the gaskets 530 and 540 may include a first gasket 530 and a second gasket 540. The first gasket 530 and the second gasket 540 may surround a periphery of the terminal hole of the upper surface portion 110. As an example, the first gasket 530 may be in a form that surrounds an outer surface around the terminal hole and the terminal hole (or, the first gasket 530 may be in a form that surrounds a portion of an inner surface around the terminal hole). The second gasket 540 may have a straight shape surrounding the inner surface around the terminal hole. In particular, the second gasket 540 may function as an insulator between the upper surface portion 110 and the first electrode current collector plate 300. Therefore, the second gasket 540 may have the same or similar size and shape as the first electrode current collector plate 300. Alternatively, the second gasket 540 may have the same or similar size and shape as the upper surface portion 110. In some embodiments, one gasket may have a shape that surrounds the entire periphery of the terminal hole. In this case, an insulating tape that replaces the role of the second gasket may be attached to the bottom surface of the upper surface portion 110 or the upper part of the first electrode current collector plate 300. For insulation from the can 100, the size of the gaskets 530 and 540 may be larger than the size of the rivet terminal 510. The rivet terminal 510 and the upper surface portion of the can 100 (when the coupling member is a metal, the coupling member and the upper surface portion of the can) may be insulated by the gaskets 530 and 540.

Referring to FIG. 2A, the cap assembly 600 may include a cap plate 610 for sealing the can 100 and a gasket 620 to insulate between the can 100 and the cap plate 610.

The cap plate 610 may include a flat surface portion 612 in a disk shape, an inclined surface 614 connected to the flat surface portion 612, and an extended surface 616 connected to the inclined surface 614. The flat surface portion 612 may be arranged to be parallel (or substantially parallel) to the second electrode current collector plate 400. The inclined surface 614 may extend obliquely downward from an edge of the flat surface portion 612. The extended surface 616 may extend from an edge of the inclined surface 614 and may be parallel to the flat surface portion 612. The extended surface 616 may be located between the beading portion 132 and the crimping portion 134 in a state of being surrounded by the gasket 620. A notch 612a may be formed in the flat surface portion 612. The notch 612a may be broken when pressure inside the secondary battery 10 is above a certain pressure. Gas inside the secondary battery 10 may be discharged when the notch 612a is broken. That is, the notch 612a may function as a vent.

The gasket 620 may be located between a lower portion of the beading portion 132 and the crimping portion 134 and may surround the extended surface 616 of the cap plate 610. The gasket 620 may surround part or all of the extended surface 616. A side where the gasket 620 and the extended surface 616 are in contact may be defined as an inner side, and a side where the gasket 620 comes into contact with the beading portion 132 may be defined as an outer side. In this case, a portion of the contact portion 420 of the second electrode current collector plate 400 may be inserted between the outer upper portion of the gasket 620 and the beading portion 132. Therefore, the contact portion 420 of the second electrode current collector plate 400 and the extended surface 616 of the cap plate 610 may not come into contact due to the gasket 620. That is, the gasket 620 may insulate the cap plate 610 and the can 100 from each other, and may insulate the cap plate 610 and the second electrode current collector plate 400 from each other.

As a result of the above-described structure, the terminal portion 500 may have a positive polarity and the can 100 may have a negative polarity.

In the above-described embodiments, the secondary battery 10, which has a structure in which the can 100 is provided with the beading portion 132 and the crimping portion 134 to fix the cap plate 610, has been described. However, the cap plate may be directly connected to the can without the beading portion or the crimping portion (some detailed descriptions of the same components as the above-described embodiments may be omitted).

FIG. 2B is a cross-sectional view of a cylindrical secondary battery according to some embodiments of the present disclosure.

A secondary battery 10' according to some embodiments of the present disclosure may be provided with a coupling portion 136' for supporting a cap plate 600' at a lower end of a side portion 130 of a can 100'. The coupling portion 136' may be provided in various forms, such as a step-shaped step, a diagonal surface, a streamlined shape close to a diagonal line, and a recess corresponding to the edge shape of a cap plate 600'. The coupling portion 136, which is an inner side edge of the side portion 130, and an edge of the cap plate 600' may be coupled by laser welding or the like. The coupling area may be coated with an anti-rust liquid to prevent or reduce damage such as rust. Because the cap plate 600' is fixed to the can 100' by welding, an electrolyte should be injected into the can 100' after welding the cap plate 600'. Therefore, a liquid injection hole may pass through the center of the cap plate 600'. The liquid injection hole may be closed with a blind rivet 710' after injecting a liquid. A sealing member 720' may be provided between the blind rivet 710' and the cap plate 600' for sealing.

A portion of an area of the cap plate 600' provided with the liquid injection hole may be provided in a concave shape from an edge. Based on the liquid injection hole, the edge area of the cap plate 600' may protrude further upward than a plate surface in which the liquid injection hole is located. Based on the state in which the cap plate 600' is coupled to the can 100', the area in which the liquid injection hole is provided may be closer to the electrode assembly 200 than the end portion of the side portion 130. That is, referring to FIG. 2B, the area in which the liquid injection hole is located may be provided in a concave shape from other areas. In other words, the edge area of the cap plate 600' may form an inner space between the cap plate 600' and the electrode assembly 200. Advantageously, the space may serve as a buffer space in which gas generated during charging and discharging of the secondary battery 10' collects.

In addition, the area of the cap plate 600' in which the liquid injection hole is provided may be in close contact with a second electrode current collector plate 400'. In this state, the cap plate 600' may be coupled to the second electrode current collector plate 400' by the blind rivet 710'. The second electrode substrate tab 224 may be welded to and electrically connected to the second electrode current collector plate 400' by laser welding or the like. Because the cap plate 600' is directly connected to the side portion 130 of the can 100', the second electrode current collector plate 400' may be omitted. In this case, the second electrode substrate tab 224 may be provided to be in direct contact with the cap plate 600'.

In the secondary battery according to some embodiments of the present disclosure having the above structure, embodiments of an improved electrode assembly that may prevent or reduce instances of a short of the electrode assembly will be described in more detail.

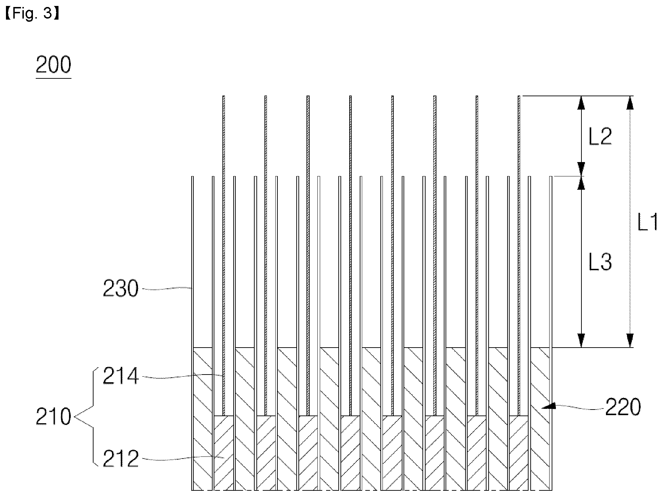

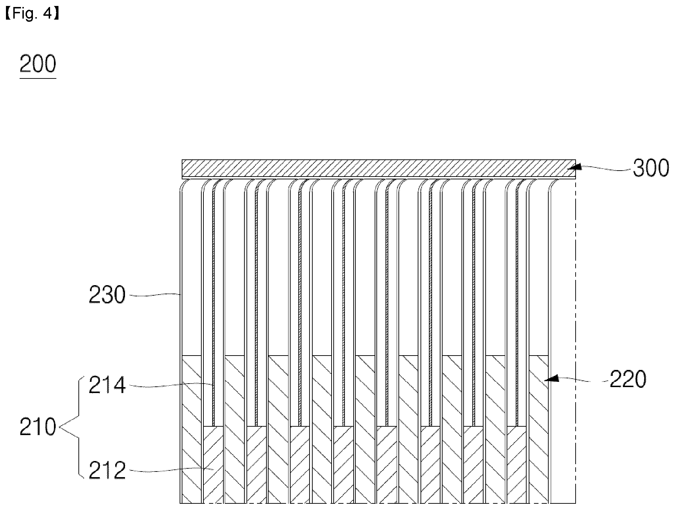

FIG. 3 is a partial cross-sectional view showing some manufacturing operations of the electrode assembly according to FIGS. 2A and 2B. FIG. 4 is a partial cross-sectional view showing operations after the manufacturing operation according to FIG. 3.

In general, as the charging and discharging of a cylindrical secondary battery is repeated, the second electrode plate 220, which is a negative electrode, expands little by little. According to some embodiments, because the second electrode current collector plate 400 is electrically connected to the second electrode plate 220, there is no problem even when the second electrode current collector plate 400 comes into contact with the second electrode plate 220.

However, the first electrode current collector plate 300 is electrically connected to the first electrode substrate tab 214 which is a positive electrode. Therefore, when the second electrode plate 220 comes into contact with the first electrode current collector plate 300, a short occurs. In addition, a short may occur even when the second electrode plate 220 comes into contact with the first electrode substrate tab 214 due to the expansion of the second electrode plate 220. To prevent or reduce this problem, according to some embodiments, by increasing the length of the separator 230, even when the second electrode plate 220 expands, the second electrode plate 220 may not come into contact with the first electrode substrate tab 214 and the first electrode current collector plate 300.

FIG. 3 shows an end portion of the electrode assembly 200 facing the upper surface portion 110 of the can 100. The first electrode plate 210 and the second electrode plate 220 may be alternately arranged. The separator 230 may be interposed between the first electrode plate 210 and the second electrode plate 220. In this case, the end portion of the second electrode plate 220 may protrude further upward than the end portion of the positive electrode active material layer 222 of the first electrode plate 210. Based on the end portion of the second electrode plate 220, a protruding length of the first electrode substrate tab 214 (a length above the end portion of the second electrode plate) may be defined as L1. In addition, a length of a portion where the first electrode substrate tab 214 is compacted and bent before the first electrode substrate tab 214 is welded to the first electrode current collector plate 300 may be defined as a folding length L2. (here, the "compaction" refers to a process of a pre-bending an end portion of a first electrode uncoated portion at a certain angle. The compaction process is also referred to as a pre-folding process). According to some embodiments, a protruding length of the separator 230 (a length above an end portion of the second electrode plate, L3) may be a length obtained by subtracting L2 from L1. That is, the separator 230 may have the protruding length L3 that may reach a portion where the first electrode substrate tab 214 is bent. When the first electrode substrate tab 214 is bent and then welded to the first electrode current collector plate 300, the first electrode substrate tab 214 may be pressed and welded. In this case, because the separator 230 also comes into contact with the first electrode current collector plate 300, the separator 230 may also be pressed. Therefore, as shown in FIG. **4****,** when the first electrode substrate tab 214 is welded to the first electrode current collector plate 300, the upper end of the separator 230 may come into contact with the first electrode current collector plate 300 in a state in which the upper end of the separator 230 is partially bent. In this case, a portion where the upper end of the separator 230 actually comes into contact may be a portion where the first electrode substrate tab 214 is bent. With the above-described structure, the separator 230 may be located between the first electrode substrate tabs 214 in contact with the first electrode current collector plate 300. Therefore, even when the second electrode plate 220 expands, the second electrode plate 220 does not come into contact with the neighboring first electrode substrate tabs 214. In addition, the second electrode plate 220 does not come into contact with the first electrode current collector plate 300. Therefore, it may be possible to prevent or reduce instances of a short between the second electrode plate 220 and the first electrode substrate tab 214 or the first electrode current collector plate 300 due to expansion of the second electrode plate 220.

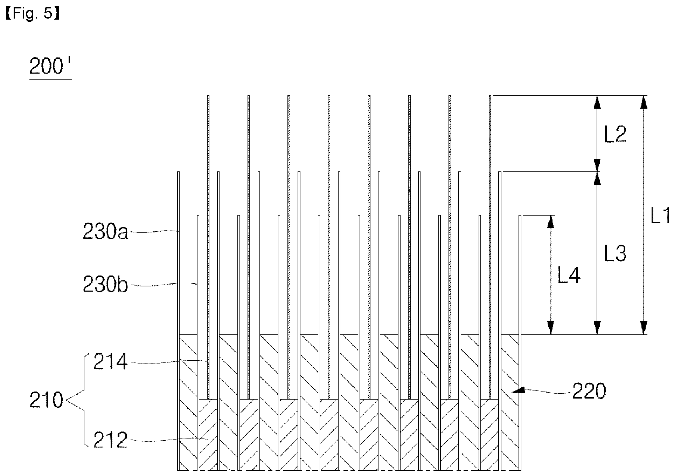

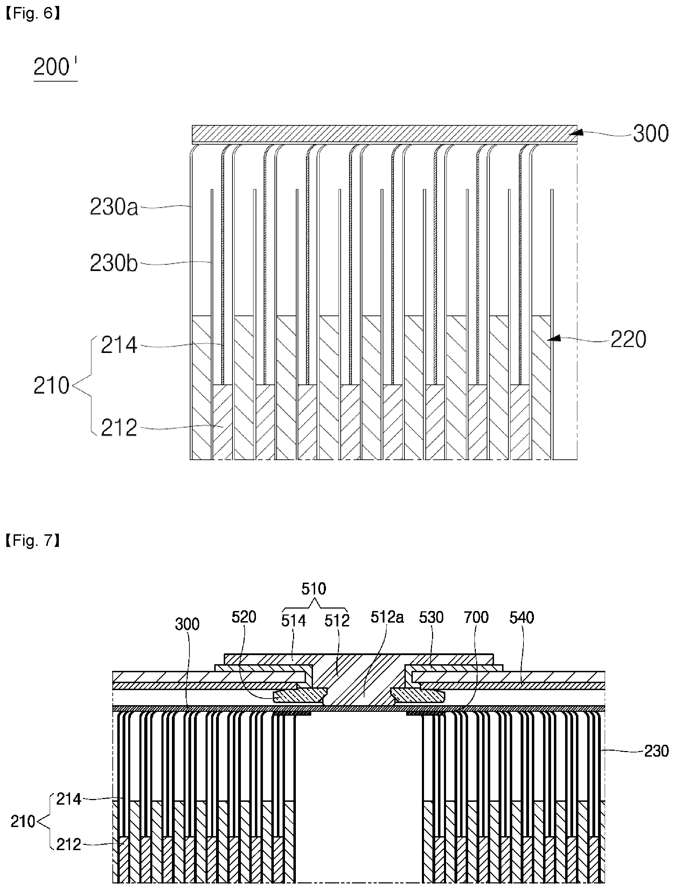

FIG. 5 is a partial cross-sectional view showing some manufacturing operations of the electrode assembly according to some embodiments of the present disclosure. FIG. 6 is a partial cross-sectional view showing an operation after the manufacturing operation according to FIG. 5.

FIG. 5 shows an end portion of an electrode assembly 200' facing the upper surface portion 110 of the can 100. The electrode assembly 200' shown in FIG. 5 has the same structure as the electrode assembly 200 shown in FIG. 3, but only the separator 230 may be configured differently.

As shown in FIG. 5, first separators 230A and second separators 230B of different lengths may be located between the first electrode plates 210 and the second electrode plates 220 that are alternately arranged. (Here, the first separator 230A is substantially the same as the separator 230 in the above-described embodiment). In this case, the first separator 230A, which has a relatively longer protruding length, and the second separator 230B, which has a relatively shorter protruding length, may be alternately arranged. Based on the outermost edge of the electrode assembly 200, the first separator 230A and the second separator 230B may be arranged inward. A protruding length of the first electrode substrate tab 214 may be defined as L1, and a bent length of the first electrode substrate tab 214 may be defined as L2. A protruding length L3 of the above-described first separator 230A may be a length obtained by subtracting L2 from L1. The protruding length L3 of the first separator 230A may be longer than the length obtained by subtracting L2 from L1. A protruding length **L4** of the above-described second separator 230B may be shorter than the protruding length L3 of the first separator 230A. As such, the arrangement of the separators from the outermost edge of the electrode assembly 200' in the order of the first separator 230A - the second separator 230B - the first separator 230A - the second separator 230B...is intended to take into account the bending direction of the first electrode substrate tab 214. That is, according to some embodiments, the first electrode substrate tab 214 is bent toward the winding center of the electrode assembly 200'. Therefore, the above-described arrangement of the separators is intended to allow the separator located inside the bent first electrode substrate tab 214 to come into contact with the first electrode current collector plate 300. As shown in FIG. 6 according to the above-described arrangement, the first separator 230A with a longer protruding length is bent inward in the bending direction of the first electrode substrate tab 214 to contact the first electrode current collector plate 300. (When welding, the upper end of the first separator is also partially bent and comes into contact with the first electrode current collector plate). In this case, a portion with which the upper end of the first separator 230A actually comes into contact may be a portion where the first electrode substrate tab 214 is bent. The second separator 230B with a short protruding length is located between the first separator 230A and the first electrode substrate tab 214. However, the protruding length of the second separator 230B is also set in consideration of the degree of expansion of the second electrode plate 220. Therefore, even when the second separator 230B with a shorter protruding length than that of the first separator 230A is used, a short between the second electrode plate 220 and the first electrode substrate tab 214 or the first electrode current collector plate 300 due to expansion of the second electrode plate 220 may be prevented or reduced.

As described above, it is possible to prevent or reduce instances of a short and ignition due to expansion of the negative electrode by adjusting the protruding length of the separator. In addition, because an insulator is not directly coated on the first electrode substrate tab, which is a positive electrode, risks such as welding defects may also be prevented or reduced. In addition, because the width of the electrode plate may be increased in the longitudinal direction of the electrode assembly, the capacity of the secondary battery may be increased.

Meanwhile, additional structures may be applied to the secondary battery to prevent or reduce instances of a short due to expansion of the negative electrode plate.

FIG. 7 is a partial cross-sectional view showing a cylindrical secondary battery according to some embodiments of the present disclosure.

As shown in FIG. 7, an insulator 700 may be additionally inserted into the lower portion of the first electrode current collector plate 300. The insulator 700 may be have a hollow plate shape. The insulator 700 may be located between the first electrode current collector plate 300 and the upper end of the electrode assembly 200. The insulator 700 may have a diameter substantially similar to that of the coupling member 520 for fixing the rivet terminal 510, but is not limited thereto. Because the insulator 700 is provided, it is possible to prevent or reduce instances of a short in the winding center of the electrode assembly 200 in which the expansion amount is greater than that of the outer winding part of the electrode assembly 200.

A cylindrical secondary battery according to embodiments of the present disclosure has a structure in which a separator tightly insulates a positive electrode current collector plate and a positive electrode substrate tab. Accordingly, even when a negative electrode plate expands when using the cylindrical secondary battery, the negative electrode plate does not come into contact with the positive electrode current collector plate or the positive electrode substrate tab. Therefore, it is possible to prevent or reduce instances of a short caused by contact of the negative electrode plate with the positive electrode current collector plate or the positive electrode substrate tab.

The above description describes aspects of some embodiments for carrying out embodiments according to the present disclosure, and embodiments according to the present disclosure are not limited to the above-described embodiments, and as claimed in the following claims, the spirit and scope of embodiments according to the present disclosure may be considered to the extent that various modifications can be made by those skilled in the art without departing from the spirit and scope of embodiments according to the present disclosure.

## Claims

1. A secondary battery (10, 10') comprising:
an electrode assembly (200, 200') having a first electrode plate (210) having a first electrode substrate tab (214) arranged in one direction, a second electrode plate (220) having a second electrode substrate tab (224) arranged in an opposite direction to the first electrode substrate tab (214), and a separator (230) interposed between the first electrode plate (210) and the second electrode plate (220), and wound into a cylindrical shape;
a cylindrical can (100') configured accommodating the electrode assembly (200, 200');
a first electrode current collector plate (300) electrically connected to the first electrode substrate tab (214); and
a second electrode current collector plate (400, 400') electrically connected to the second electrode substrate tab (224),
wherein the first electrode substrate tab (214) contacts the first electrode current collector plate (300), and the separator (230) extends and contacts the first electrode current collector plate (300) with the first electrode substrate tab (214) interposed therebetween.

2. The secondary battery (10, 10') as claimed in claim 1, wherein the first electrode substrate tab (214) is bent and contacts one surface of the first electrode current collector plate (300), and an end portion (512a) of the separator (230) contacts the first electrode substrate tab (214).

3. The secondary battery (10, 10') as claimed in claim 1 or 2, wherein the separator (230) includes a first separator (230A) on one side of the first electrode substrate tab (214) and a second separator (230B) on the other side of the first electrode substrate tab (214).

4. The secondary battery (10, 10') as claimed in claim 3, wherein the first separator (230A) and the second separator (230B) have different lengths in a longitudinal direction of the electrode assembly (200, 200').

5. The secondary battery (10, 10') as claimed in claim **4,** wherein the first separator (230A) is longer than the second separator (230B), and the first separator (230A) contacts the first electrode current collector plate (300) with the first electrode substrate tab (214) interposed therebetween and/or wherein the first electrode substrate tab (214) is bent and contacts one surface of the first electrode current collector plate (300), and then an end portion (512a) of the separator (230) contacts the first electrode substrate tab (214) and/or wherein the second separator (230B) is spaced apart from the first electrode current collector plate (300).

6. The secondary battery (10, 10') as claimed in claims 2 to 5, wherein the can (100') includes a circular upper surface portion (110) in which a terminal hole is formed through a center, and a cylindrical side portion (130) extending downward from the upper surface portion (110) and electrically connected to the second electrode current collector plate (400, 400') and/or further comprising:
a terminal portion (500) including a rivet terminal (510) coupled to the terminal hole and having a first end exposed to the outside of the upper surface portion (110) and a second end in contact with an other surface of the first electrode current collector plate (300) to electrically connect to the first electrode current collector plate (300), and at least one gasket (530, 540, 620) insulating between the rivet terminal (510) and the upper surface portion (110); and
a cap assembly (600) including a cap plate (600', 610) coupled to the side portion (130) to seal the can (100') and a gasket (530, 540, 620) formed of an insulating material and inserted between the side portion (130) and the cap plate (600', 610).

7. A secondary battery (10, 10') comprising:
a can (100') having a circular upper surface portion (110) and a cylindrical side portion (130) extending downward from the upper surface;
an electrode assembly (200, 200') having a first electrode plate (210) having a first electrode substrate tab (214) arranged toward the upper surface portion (110), a second electrode plate (220) having a second electrode substrate tab (224) arranged in an opposite direction to the first electrode substrate tab (214), and a first separator (230A) interposed between the first electrode plate (210) and the second electrode plate (220), and wound in a cylindrical shape;
a first electrode current collector plate (300) electrically connected to the first electrode substrate tab (214); and
a second electrode current collector plate (400, 400') electrically connected to the second electrode substrate tab (224),
wherein the first electrode substrate tab (214) contacts the first electrode current collector plate (300), and the first separator (230A) contacts the first electrode current collector plate (300) with the first electrode substrate tab (214) and an end portion (512a) of the second electrode plate (220) interposed therebetween.

8. The secondary battery (10, 10') as claimed in claim 7, wherein a protruding length (L2) by which the first separator (230A) protrudes upward from an upper end of the second electrode plate (220) is shorter than a protruding length (L1) by which the first electrode substrate tab (214) protrudes upward from the upper end of the second electrode plate (220).

9. The secondary battery (10, 10') as claimed in claim 8, wherein the first electrode substrate tab (214) is bent by a folding length before being welded to the first electrode current collector plate (300).

10. The secondary battery (10, 10') as claimed in claim 9, wherein the protruding length (L2) of the first separator (230A) is a length obtained by subtracting the folding length from the protruding length (L1) of the first electrode substrate tab (214).

11. The secondary battery (10, 10') as claimed in claims 7 to10, wherein the electrode assembly (200, 200') further includes a second separator (230B).

12. The secondary battery (10, 10') as claimed in claims 8 to 11, wherein a protruding length (L3) by which the second separator (230B) protrudes upward from the upper end of the second electrode plate (220) is shorter than the protruding length (L2) of the fist separator (230).

13. The secondary battery (10, 10') as claimed in claims 9 to 12, wherein the first electrode substrate tab (214) faces a winding center of the electrode assembly (200, 200'), and the first separator (230A) is arranged in a direction in which the first electrode substrate tab (214) is bent and/or wherein the second separator (230B) is spaced apart from the first electrode current collector plate (300).

14. The secondary battery (10, 10') as claimed in claims 7 to 13, further comprising:
a terminal portion (500) coupled to the upper surface portion (110) and electrically connected to the first electrode current collector plate (300); and
a cap assembly (600) including a cap plate (600', 610) coupled to the side portion (130) to seal the can (100') and a gasket (530, 540, 620) formed of an insulating material and inserted between the side portion (130) and the cap plate (600', 610) and/or the terminal portion (500) includes a rivet terminal (510) having one end exposed to the outside of the upper surface portion (110) and the other end in contact with the other surface of the first electrode current collector plate (300), and at least one gasket (530, 540, 620) insulating between the rivet terminal (510) and the upper surface portion (110).

15. The secondary battery (10, 10') as claimed in claims 7 to 14, wherein the second electrode plate (220) is electrically connected to the side portion (130).
